# EUROPEAN PATENT APPLICATION

(11) **EP 4 832 029 A1**
(43) Date of publication of application: **28.10.2026**
(21) Application number: 24910584.2
(22) Date of filing: 04.12.2024
(51) Int. Cl.: H01G 2/10, H01G 2/08, H01G 4/38, H01G 4/40

(54) **CAPACITOR HOUSING, INTEGRATED ASSEMBLY, AND MANUFACTURING METHOD THEREFOR**

(30) Priority: 29.12.2023 CN 202311848218
(71) Applicant: Leadrive Technology (Shanghai) Co. Ltd, Shanghai 201203 (CN)
(72) Inventor: LIU, Zhenbing, Shanghai 201203 (CN); YANG, Xiaobo, Shanghai 201203 (CN)
(74) Representative: Ridderbusch, Oliver
(86) International application number: PCT/CN2024/136687
(87) International publication number: WO 2025/139652

(57) **Abstract**

The present invention provides a capacitor housing and an integrated assembly, and a preparation method thereof, relating to the technical field of capacitor cooling structures. The capacitor housing is integrally formed from metal and comprises a housing support portion for integrating a cooling water channel and a capacitor element. The cooling water channel is disposed on a top surface of the housing support portion and partially extends recessed into the housing support portion. A limiting portion is provided perpendicularly on a bottom surface of the housing support portion for forming a limiting region accommodating the capacitor element. The cooling water channel covers the limiting region. The limiting portion is correspondingly disposed on both sides of the cooling water channel in a width direction and on either side of the cooling water channel in a length direction so as to form a circumferential side wall of the limiting region, thereby solving the problems in the prior art that an additional cooling water channel or heat sink is arranged on a capacitor housing, resulting in low heat dissipation efficiency and large volume occupation.

## Description

### Technical Field

The present invention relates to the technical field of capacitor cooling structures, and in particular to a capacitor housing, an integrated assembly and a preparation method thereof.

### Background Art

In motor controllers, the drawbacks of bus capacitors, such as large volume and heavy weight, constitute the greatest obstacle to miniaturisation of electronic control units. It is necessary to provide a well-designed capacitor cooling and packaging structure so as to effectively reduce the volume of the capacitor, achieve high power density of the electronic control unit, and enable platform-based product design and cost reduction. However, in existing capacitor designs, particularly when used in conjunction with power modules, a heat sink or a cooling water channel is disposed outside the capacitor housing. Under such arrangements, the heat dissipation surface is located at a considerable distance from the heat-generating source of the capacitor, resulting in poor heat dissipation efficiency and low utilisation of the housing space, which in turn leads to a large capacitor volume.

### Summary of the Invention

In order to overcome the above-mentioned technical drawbacks, an object of the present invention is to provide a capacitor housing, an integrated assembly and a preparation method thereof, so as to solve the problems in the prior art that an additional cooling water channel or heat sink is arranged on a capacitor housing, resulting in low heat dissipation efficiency and large volume occupation.

The present invention discloses a capacitor housing which is integrally formed from metal and comprises:
a housing support portion configured for integrating a cooling water channel and a capacitor element, wherein the cooling water channel is disposed on a top surface of the housing support portion and partially extends recessed into the housing support portion;
a limiting portion disposed perpendicularly on a bottom surface of the housing support portion for forming a limiting region accommodating the capacitor element,
wherein the cooling water channel covers the limiting region; and
the limiting portion is correspondingly disposed on both sides of the cooling water channel in a width direction and on either side of the cooling water channel in a length direction so as to form a circumferential side wall of the limiting region.

Preferably, the housing support portion is provided, on both sides of the cooling water channel, with a water inlet portion and a water outlet portion that are in communication with the cooling water channel respectively; and
the water inlet portion and the water outlet portion are disposed perpendicular to the cooling water channel and each extend out from the bottom surface of the housing support portion.

Preferably, the limiting portion gradually decreases in thickness in a direction from a connection end with the housing support portion towards an end remote from the housing support portion.

Preferably, a side wall of the limiting portion located within the limiting region is inclined at a predetermined angle range from an end connected to the housing support portion to an end remote from the housing support portion, wherein the predetermined angle range is 1° to 2°.

Preferably, the housing support portion is provided with a plurality of limiting through-holes for connecting a power module.

The present invention further provides an integrated assembly comprising the above-mentioned capacitor housing, wherein:
a capacitor element is encapsulated in the limiting region of the capacitor housing;
the integrated assembly further comprises at least one power module connected to the capacitor housing and closing the cooling water channel; and
the power module is connected to the capacitor element by means of a copper busbar.

Preferably, the capacitor element is wrapped with an insulating isolation film.

Preferably, one end of the copper busbar is connected to the capacitor element, and the other end is bent towards the top surface of the housing support portion for connection with the power module.

The present invention further provides a method for preparing a capacitor housing, for preparing the above-mentioned capacitor housing, comprising:
integrally forming the capacitor housing by die casting using a predetermined mould, and demoulding by moving in a direction perpendicular to a top surface of the housing support portion.

The present invention further provides a method for preparing an integrated assembly, for preparing the above-mentioned integrated assembly, comprising:
providing a capacitor element, the above-mentioned capacitor housing, or a capacitor housing obtained by the above-mentioned preparation method;
insulatingly wrapping the capacitor element and assembling the capacitor element with the capacitor housing;
fixing positions of the capacitor element and the capacitor housing by means of a predetermined jig, wherein the capacitor element is confined within the predetermined jig and the limiting region of the capacitor housing;
performing potting between the predetermined jig and the limiting region of the capacitor housing, curing at 100°C for 6 hours, and then demoulding the predetermined jig; and
fixing a power module on the capacitor housing and connecting the power module to the capacitor element by means of a copper busbar.

After adopting the above-mentioned technical solution, the following beneficial effects are achieved compared with the prior art:
The capacitor housing, the integrated assembly and the preparation method thereof provided by the present application employ an integrally formed metallic capacitor housing which can integrate a capacitor, a power module and a cooling water channel. As there is no enclosed cavity, a welding process is not required. The limiting region used for potting the capacitor is of an open type, with one side being a capacitor copper busbar extension and potting surface, and the other side being a mould demoulding surface. During demoulding, the overall vertical movement distance of the capacitor housing is relatively short, resulting in high utilisation of the capacitor cavity. By means of limiting through-holes employing plug or special screw configurations for power module connection, the metal surface of the capacitor element adjacent to the cooling water channel is rendered flat, thereby reducing thermal resistance and improving heat dissipation efficiency. The structure is compact and assembly is simple. This integrated design solves the problems in the prior art that an additional cooling water channel or heat sink is arranged on a capacitor housing, the heat dissipation surface is located at a considerable distance from the heat-generating source of the capacitor, heat dissipation efficiency is low, space utilisation is poor, and volume occupation is large.

### Brief Description of the Drawings

Figure 1 is a schematic structural view of a capacitor housing according to various embodiments of the capacitor housing, integrated assembly and preparation method thereof of the present invention;
Figure 2 is a schematic structural view of a limiting region according to various embodiments of the capacitor housing, integrated assembly and preparation method thereof of the present invention;
Figure 3 is a schematic structural view of a limiting portion according to various embodiments of the capacitor housing, integrated assembly and preparation method thereof of the present invention;
Figure 4 is a schematic structural view of a cooling water channel according to various embodiments of the capacitor housing, integrated assembly and preparation method thereof of the present invention;
Figure 5 is a schematic structural view of a limiting through-hole according to various embodiments of the capacitor housing, integrated assembly and preparation method thereof of the present invention;
Figure 6 is a schematic structural view of a mould according to Embodiment 2 of the capacitor housing, integrated assembly and preparation method thereof of the present invention; and
Figure 7 is a schematic structural view of a jig according to Embodiment 4 of the capacitor housing, integrated assembly and preparation method thereof of the present invention.

### Reference signs:

1 - capacitor housing; 11 - housing support portion; 12 - limiting portion; 13 - limiting region; 2 - cooling water channel; 3 - capacitor element; 4 - copper busbar; 5 - water inlet portion; 6 - water outlet portion; 7 - limiting through-hole; 8 - power module; 9 - insulating isolation film.

### Detailed Description of Embodiments

The advantages of the present invention will be further elucidated below with reference to the accompanying drawings and specific embodiments.

Detailed reference will now be made to exemplary embodiments, examples of which are illustrated in the accompanying drawings. Where the following description refers to the drawings, unless otherwise indicated, like numerals in different drawings designate like or similar elements. The implementations described in the following exemplary embodiments are not intended to represent all implementations consistent with the present disclosure. Rather, they are merely examples of apparatuses and methods consistent with certain aspects of the present disclosure as detailed in the appended claims.

The terminology used in the present disclosure is for the purpose of describing particular embodiments only and is not intended to be limiting. The singular forms "a", "the" and "said" as used in the present disclosure and the appended claims are also intended to include the plural forms, unless the context clearly dictates otherwise. It will also be understood that the term "and/or" as used herein refers to and includes any and all possible combinations of one or more of the associated listed items.

It will be understood that, although the terms "first", "second", "third" and the like may be used herein to describe various items of information, these items of information should not be limited by these terms. Depending on the context, the word "if" as used herein may be construed as "at the time of" or "when" or "in response to determining".

In the description of the present invention, it will be understood that the terms "longitudinal", "transverse", "upper", "lower", "front", "rear", "left", "right", "vertical", "horizontal", "top", "bottom", "inner", "outer" and the like indicate orientations or positional relationships based on those shown in the drawings, and are merely for the purpose of facilitating description of the present invention and simplifying the description, and are not intended to indicate or imply that the referred device or element must have a particular orientation, be constructed and operate in a particular orientation, and therefore should not be construed as limiting the present invention.

In the description of the present invention, unless otherwise provided and limited, it will be understood that the terms "mounted", "connected" and "coupled" are to be construed in a broad sense, and may refer to, for example, a mechanical connection or an electrical connection, an internal communication between two elements, a direct connection, or an indirect connection through an intermediate medium. A person skilled in the art will be able to understand the specific meaning of the above terms in the present invention according to the specific circumstances.

In the following description, suffixes such as "module", "component" or "unit" used for denoting elements are employed merely to facilitate the explanation of the present invention and do not per se have any particular meaning. Accordingly, "module" and "component" may be used interchangeably.

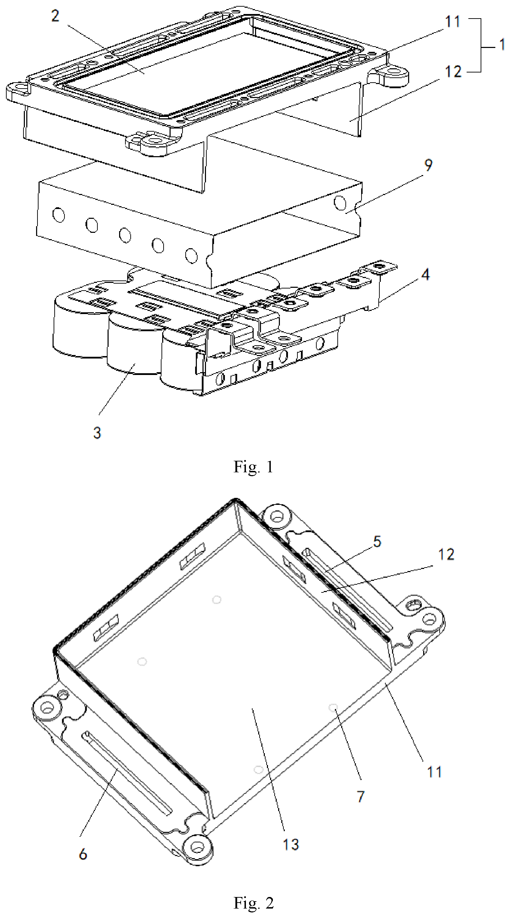

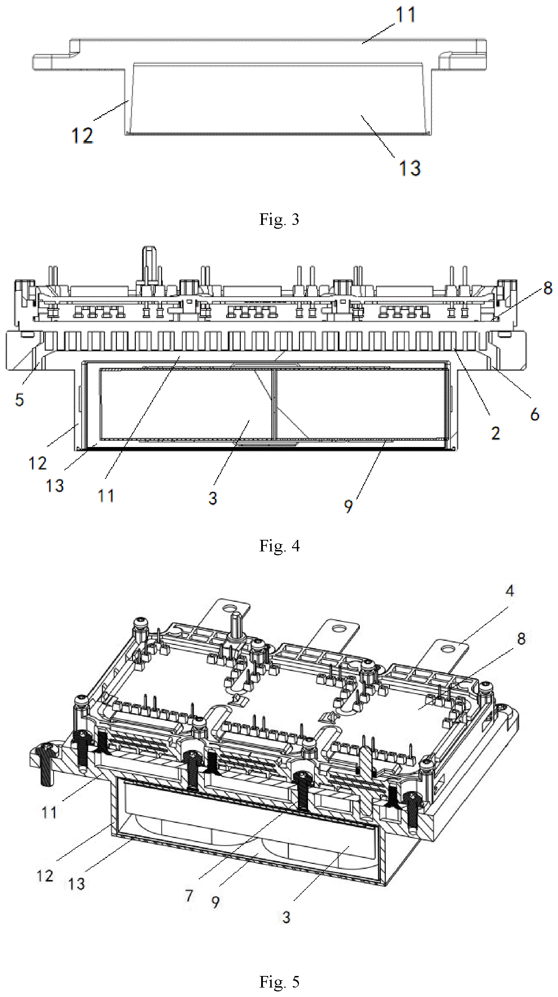

Embodiment 1: The present embodiment provides a capacitor housing. It should be particularly emphasised that the capacitor housing is a metallic housing integrally formed by die casting. Referring to Figures 1 to 6, the capacitor housing can be used for integrating a capacitor, a cooling water channel and a power module. Specifically, the capacitor housing comprises a housing support portion, which may be provided in a substantially cuboid shape, and a limiting portion for integrating a cooling water channel and a capacitor element. The cooling water channel is disposed on a top surface of the housing support portion and partially extends recessed into the housing support portion. The limiting portion is disposed perpendicularly on a bottom surface of the housing support portion, is provided in a plate-like structure, and is used for forming a limiting region accommodating the capacitor element. The cooling water channel covers the limiting region, so that cooling water entering the cooling water channel can dissipate heat from the capacitor element through the housing support portion. As a result, heat transfer only needs to pass through the housing support portion without generating other heat losses, and thus heat dissipation efficiency is relatively high.

It should also be noted that the top surface and the bottom surface of the above-mentioned housing support portion are opposite side surfaces, and do not limit any particular side surface. When any side surface of the housing support portion is determined to be the top surface, the opposite side surface is the bottom surface. At the same time, it will be understood that a capacitor module formed by integrating a capacitor element with the capacitor housing of the present application also falls within the scope of protection of the present application. The limiting region for accommodating a capacitor element provided by the capacitor housing of the present embodiment differs from existing designs. Specifically, the limiting portion is correspondingly disposed on both sides of the cooling water channel in a width direction and on either side of the cooling water channel in a length direction so as to form a circumferential side wall of the limiting region. That is, the limiting region is not enclosed on all four sides with a side surface opposite to the housing support portion being left for accommodating the capacitor element as in existing designs, nor is the limiting region open on one circumferential side for accommodating the capacitor element while the remaining side surfaces and the side surface opposite to the housing support portion are closed as in other existing designs. The design of the limiting region being surrounded on three sides serves, on the one hand, to achieve the limiting of the capacitor element so as to integrate the capacitor element, and on the other hand, can reduce the space occupation of the entire capacitor housing to a certain extent, and further allows capacitor elements of different thicknesses to be integrated according to actual application scenarios so as to meet the requirements of actual application scenarios.

In a preferred embodiment, the above-mentioned cooling water channel may be disposed along both the length direction and the width direction of the housing support portion, and its width and length are slightly smaller than the length and width of the housing support portion, respectively, so that the housing support portion protrudes beyond the cooling water channel by a portion, and controls water inlet and outlet at the extended portion. Specifically, the housing support portion is provided, on both sides of the cooling water channel, with a water inlet portion and a water outlet portion that are in communication with the cooling water channel respectively; and the water inlet portion and the water outlet portion are disposed perpendicular to the cooling water channel and each extend out from the bottom surface of the housing support portion.

On the basis of the above, as a supplement, in the present embodiment, the water inlet portion and the water outlet portion are disposed perpendicular to the cooling water channel and are in communication with the cooling water channel. That is to say, the end portions of the water inlet portion and the water outlet portion are in communication with the interior of the cooling water channel (i.e., the recessed cavity space formed within the housing support portion), and the side surfaces of the end portions of the water inlet portion and the water outlet portion intersect with the bottom wall of the cooling water channel. The entire housing support portion has no enclosed space, does not require welding, and can be integrally formed by die casting using a mould.

In a preferred embodiment, the limiting portion gradually decreases in thickness in a direction from a connection end with the housing support portion towards an end remote from the housing support portion. The limiting portion surrounds and forms a limiting region acting on the capacitor element, and has a certain extended height. During die casting and demoulding of the capacitor housing of the present embodiment, demoulding is performed along the direction of the extended height, i.e., in the vertical direction from the top surface to the bottom surface of the housing support portion. Therefore, during the demoulding process, the above-mentioned limiting portion moves in the vertical direction. At this point, the above-mentioned thickness variation is provided such that the limiting portion at a deeper position in the mould has a smaller thickness, and the limiting portion at a shallower position in the mould has a larger thickness, thereby forming inclined surfaces on both side walls for ease of demoulding.

More specifically, as mentioned above, due to the requirements of demoulding, the thickness of the limiting portion varies to a certain extent. Specifically, a side wall of the limiting portion located within the limiting region is inclined at a predetermined angle range from an end connected to the housing support portion to an end remote from the housing support portion, wherein the predetermined angle range is 1° to 2°. Both side walls of the limiting portion, on the inner and outer sides relative to the limiting region, are inclined such that the limiting portion can be visually regarded as an inverted trapezoid, thick at the top and thin at the bottom, when viewed from a side of the housing support portion.

On the basis of the foregoing, the limiting portion forms circumferential part (but not all) of the side walls of the limiting region, and the overall design of the limiting portion is as described above. The capacitor housing of the present embodiment can be demoulded along the direction in which the limiting portion extends out from the housing support portion, i.e., demoulded along the thickness direction of the capacitor element, rather than demoulded along the length/width direction of the capacitor element as is commonly done in the prior art. It should be noted that the purpose of the inclined surfaces formed by the inner walls is to facilitate demoulding. However, since the capacitor element is generally in a substantially cuboid shape, when the capacitor element is placed in the limiting region, gaps will exist between the inclined surfaces and the capacitor element. Moreover, since most of the circumferential side is open for the capacitor element to enter, as the capacitor element is inserted deeper, it may be restricted by the inner diameter, i.e., there exists a portion of relatively thick region where the inclined space is ineffective space, resulting in a loss of part of the space within the capacitor housing. In the present embodiment, the limiting space formed by the limiting portion does not require the capacitor element to enter from any particular circumferential side.

At the same time, since it will be understood that the thickness direction of the capacitor element is smaller than the length/width direction of the capacitor element, the overall vertical movement distance of the capacitor housing during demoulding is relatively short. Consequently, the length of the inclined surface formed by the thickness variation of the limiting portion is shorter than that required in the prior art, and therefore the space loss caused by the inclined surface is smaller. By way of example, for a capacitor housing demoulded along the length direction of the capacitor element, the effective volume is 106 × 19.8 and the space loss volume is 117 × 27. From this, the calculated volume utilisation rate, i.e., the ratio of the effective volume to the sum of the effective volume and the loss volume, or, calculated as the volume computed based on the inner wall of the limiting region formed by the limiting portion divided by the volume computed based on the outer wall of the limiting region formed by the limiting portion, is approximately 66%. In contrast, the capacitor housing provided by the present application, due to the smaller inclined surfaces in the draft direction, can achieve a volume utilisation rate of 98%.

In a preferred embodiment, the housing support portion is provided with a plurality of limiting through-holes for connecting a power module. The limiting through-holes may be disposed around the cooling water channel, for example at four corners of the cooling water channel, or may be disposed within the cooling water channel, in which case the sealing performance after connection should be taken into consideration. In the present embodiment, screws are inserted into the limiting through-holes to cooperate in fixing the power module on the housing support portion. Optionally, plugs or special screws may be used so that the screws closely cooperate with the limiting through-holes without extending out from the housing support portion, which differs from the partial protrusions provided towards the capacitor element side in the prior art for achieving sufficient screw tightening depth. As a result, the heat dissipation path formed by the metal surface of the capacitor element adjacent to the cooling water channel is shorter and has lower thermal resistance, thereby increasing the heat conduction capability several-fold and further improving heat dissipation efficiency, while eliminating the prior art thermal resistance layer of approximately 2 mm having a thermal conductivity of ~0.3 W/(m·K) caused by the provision of protrusions.

The present embodiment utilises a mould for integral formation, providing a metallic capacitor housing that can integrate a power module and a cooling water channel. The structure is compact and assembly is simple. As there is no enclosed cavity, component manufacturing does not require a welding process. The capacitor potting cavity (i.e., the above-mentioned limiting region) is of an open type, with one side being a capacitor copper busbar extension and potting surface, and the other side being a mould demoulding surface. The draft dimensions are small, and the capacitor cavity utilisation rate is high. The capacitor element and copper busbar are arranged adjacent to the water channel, and plug or special tool configurations are employed for power module connection, avoiding the provision of local protrusions. As a result, the distance from the capacitor element to the metal surface adjacent to the water channel is shorter, thermal resistance is lower, heat dissipation efficiency is further improved.

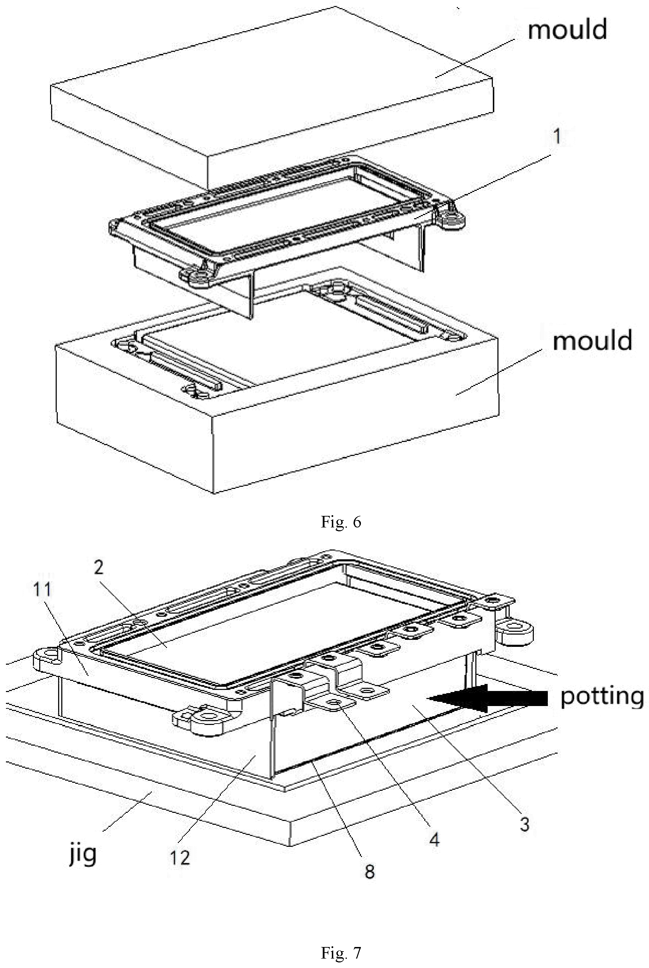

Embodiment 2: The present embodiment provides a method for preparing a capacitor housing, for preparing the capacitor housing of Embodiment 1 above. Referring to Figure 6, the method comprises: integrally forming the capacitor housing by die casting using a predetermined mould. As described in Embodiment 1 above, since the water inlet portion and the water outlet portion of the capacitor housing are disposed perpendicular to the cooling water channel and are in communication with the cooling water channel, the entire interior of the capacitor housing has no enclosed cavity, thereby facilitating integral formation.

Further, demoulding is performed by vertical movement in a direction perpendicular to the top surface of the housing support portion. That is, the capacitor housing can be demoulded along the direction in which the limiting portion extends out from the housing support portion, i.e., demoulded along the thickness direction of the capacitor element, or viewed as demoulding along the direction of the shortest side of the capacitor element (vertically, rather than horizontally as in the prior art), thereby making the inclined surfaces provided for ease of demoulding shorter so as to save the ineffective space formed by the inclined surfaces. In the capacitor housing prepared by the present embodiment, one side of the limiting region is a capacitor copper busbar extension and potting surface, and the other side is a mould demoulding surface. The draft dimension (i.e., the overall movement distance of the housing during demoulding) is small, and the capacitor cavity internal utilisation rate is high.

Embodiment 3: The present embodiment provides an integrated assembly. Referring to Figures 1 to 7, the integrated assembly comprises the capacitor housing according to any one of Embodiment 1 above, wherein: a capacitor element is encapsulated in the limiting region of the capacitor housing; the integrated assembly further comprises at least one power module connected to the capacitor housing and closing the cooling water channel. By means of the integrated assembly, the capacitor is encapsulated, and the power module and the cooling water channel are integrated. Heat is dissipated from the capacitor element and the power module respectively through both sides of the cooling water channel. The number and dimensions of the power modules may be specifically set according to actual application scenarios.

In a preferred embodiment, the capacitor element is encapsulated in the limiting region. To improve safety in use, it is necessary to provide insulating isolation for the capacitor element. Specifically, an insulating isolation film is wrapped around the capacitor element, and the insulating isolation film completely covers the circumference of the capacitor element. Other existing insulating isolation methods may also be integrated in the capacitor housing, including but not limited to the application of an insulating coating or the like.

Specifically, in the present embodiment, the power module is connected to the capacitor element by means of a copper busbar. One end of the copper busbar is connected to the capacitor element, and the other end is bent towards the top surface of the housing support portion for connection with the power module. As a supplement, the copper busbar is bent from the connection point with the capacitor element, conforms to the side surface of the capacitor housing, and extends upward to the power module, i.e., the copper busbar is arranged on one side of the capacitor housing so as to facilitate the provision of a copper busbar support bracket or connection to other modules, thereby expanding the range of application scenarios for the integrated assembly.

The integrated assembly provided by the present embodiment integrates the capacitor, the cooling water channel and the power module, utilising the integrally formed capacitor housing of Embodiment 1. There is no need for lateral insertion or removal of the capacitor element, and no welded water channel. Heat transfer is achieved directly through the metallic housing, resulting in relatively high heat dissipation efficiency and high space utilisation. The integrated assembly has a compact structure and can be assembled with other modules or elements in a motor control unit, solving the problems in the prior art that an additional cooling water channel or heat sink is arranged on a capacitor housing, resulting in low heat dissipation efficiency, large volume occupation, and inconvenient module arrangement.

Embodiment 4: The present embodiment further provides a method for preparing an integrated assembly, for preparing the integrated assembly of Embodiment 3 above. The method comprises: providing a capacitor element, the capacitor housing of Embodiment 1 above, or a capacitor housing obtained by the preparation method of Embodiment 2 above. Specifically, the method comprises the following operational steps:
S1: Insulatingly wrapping the capacitor element and assembling the capacitor element with the capacitor housing.

Specifically, the capacitor housing is metallic and integrally formed. In the present embodiment, an insulating isolation film is used to wrap the capacitor element, although other existing insulating isolation materials may also be used. The capacitor element is then placed in the limiting region within the capacitor housing, thereby achieving assembly of the capacitor element and the capacitor housing.

S2: Fixing positions of the capacitor element and the capacitor housing by means of a predetermined jig, wherein the capacitor element is confined within the predetermined jig and the limiting region of the capacitor housing.

By way of explanation, the above-mentioned predetermined jig (referring to Figure 7) is optionally provided as a plate-like structure, and its dimensions may be slightly larger than the length and width of the capacitor housing. The jig is used to conform to the end surface of the limiting portion on the capacitor housing, i.e., to cover the side of the limiting region opposite to the bottom surface of the housing support portion, so that the capacitor element is confined within the limiting region and cannot move out of the limiting region. Since the capacitor element can still move within the limiting region at this point, it needs to be fixed, as described below, by further fixing through potting. Specifically, the jig may be provided with a coating/film layer on the surface in contact with the capacitor housing to prevent adhesion to the potting material, thereby facilitating subsequent demoulding.

S3: Performing potting between the predetermined jig and the limiting region of the capacitor housing, curing at 100°C for 6 hours, and then demoulding the predetermined jig.

On the basis of the above, after the predetermined jig is arranged on one side of the capacitor housing, five circumferential sides of the limiting region are enclosed, with the remaining side in a certain direction being open. Potting is performed into the limiting region from the side where the opening is located, and high-temperature curing is carried out so that the capacitor element is fixed within the limiting region and integrated with the capacitor housing, forming an integrated capacitor module. The capacitor module can also be directly applied in motor control or assembled with other modules/elements.

S4: Fixing a power module on the capacitor housing and connecting the power module to the capacitor element by means of a copper busbar.

Specifically, as described in Embodiment 1 above, the capacitor housing is provided with limiting through-holes. Optionally, plugs or special screws may be used so that the screws closely cooperate with the limiting through-holes, and the position of the limiting through-holes does not protrude towards the capacitor element, so that the heat dissipation surface on the side where the capacitor element is located is completely flat, thereby improving the space utilisation of the capacitor housing. At the same time, the cooling water channel can dissipate heat from the capacitor element through a single metal layer, thereby improving heat dissipation efficiency to a certain extent.

It should be noted that the above step S4 involves connecting the power module to the capacitor housing. Since the power module and the capacitor element are arranged on opposite sides of the capacitor housing, this step may be completed before step S1, i.e., before the capacitor element is assembled, or may be completed after step S3, depending on the specific implementation scenario. The power module may be any existing type of power module, or may be replaced by other modules, provided that they are compatible for connection with the capacitor housing.

On the basis of the above steps S1 to S4, an integrated assembly integrating the capacitor, the power module and the cooling water channel can be prepared, solving the problems in the prior art that an additional cooling water channel or heat sink is arranged on a capacitor housing, resulting in large volume occupation and inconvenient module arrangement. At the same time, during the preparation process, the capacitor housing is integrally formed by metallic die casting with the cooling water channel integrated therein, and the predetermined jig is used to fix the capacitor element and the capacitor housing, so that the limiting region provided for the capacitor element on the capacitor housing does not need to be enclosed, but instead forms an open space. As a result, not only is the overall movement distance of the capacitor housing during demoulding relatively small, the inclined surfaces provided for ease of demoulding are relatively short, and the resulting ineffective volume is relatively small, so that the space utilisation within the formed capacitor housing is relatively high, but also capacitor elements of other different dimensions can be accommodated, thereby improving application compatibility.

Therefore, based on the capacitor housing or the integrated assembly prepared by Embodiment 2 or Embodiment 4 above, the integrated mounting of a capacitor and a power module is achieved to form a power assembly. The structure is compact, assembly is simple, platform-based design of motor controllers is facilitated, the volume is small, and the cost is low. Moreover, the metallic material is integrally formed, resulting in relatively high heat dissipation efficiency. Other modules/elements can also be integrated for application in motor control.

It should be noted that the embodiments of the present invention have relatively good practical applicability and are not intended to limit the present invention in any form. Any person skilled in the art may utilise the technical content disclosed above to modify or alter the embodiments into equivalent embodiments without departing from the scope of the technical solution of the present invention. Any modifications, equivalent variations and alterations made to the above embodiments according to the technical essence of the present invention shall fall within the scope of the technical solution of the present invention, so long as they do not depart from the content of the technical solution of the present invention.

## Claims

1. A capacitor housing, integrally formed from metal, comprising:
a housing support portion configured for integrating a cooling water channel and a capacitor element, wherein the cooling water channel is disposed on a top surface of the housing support portion and partially extends recessed into the housing support portion;
a limiting portion disposed perpendicularly on a bottom surface of the housing support portion for forming a limiting region accommodating the capacitor element,
**characterised in that**:
the cooling water channel covers the limiting region; and
the limiting portion is correspondingly disposed on both sides of the cooling water channel in a width direction and on either side of the cooling water channel in a length direction so as to form a circumferential side wall of the limiting region.

2. The capacitor housing according to claim 1, **characterised in that**:
the housing support portion is provided, on both sides of the cooling water channel, with a water inlet portion and a water outlet portion respectively; and
the water inlet portion and the water outlet portion are disposed perpendicular to the cooling water channel and each extend out from the bottom surface of the housing support portion.

3. The capacitor housing according to claim 1, **characterised in that**:
the limiting portion gradually decreases in thickness in a direction from a connection end with the housing support portion towards an end remote from the housing support portion.

4. The capacitor housing according to claim 3, **characterised in that**:
a side wall of the limiting portion located within the limiting region is inclined at a predetermined angle range from an end connected to the housing support portion to an end remote from the housing support portion, wherein the predetermined angle range is 1° to 2°.

5. The capacitor housing according to claim 1, **characterised in that**:
the housing support portion is provided with a plurality of limiting through-holes for connecting a power module.

6. An integrated assembly, comprising:
a capacitor housing according to any one of claims 1 to 5, wherein a capacitor element is encapsulated in the limiting region of the capacitor housing;
at least one power module connected to the capacitor housing and closing the cooling water channel; and
a copper busbar connecting the power module to the capacitor element.

7. The integrated assembly according to claim 6, **characterised in that**:
the capacitor element is wrapped with an insulating isolation film.

8. The integrated assembly according to claim 6, **characterised in that**:
one end of the copper busbar is connected to the capacitor element, and the other end is bent towards the top surface of the housing support portion for connection with the power module.

9. A method for preparing a capacitor housing, for preparing the capacitor housing according to any one of claims 1 to 5, comprising:
integrally forming the capacitor housing by die casting using a predetermined mould, and demoulding by moving in a direction perpendicular to a top surface of the housing support portion.

10. A method for preparing an integrated assembly, for preparing the integrated assembly according to any one of claims 6 to 8, comprising:
providing a capacitor element, a capacitor housing according to any one of claims 1 to 5 or a capacitor housing obtained by the preparation method according to claim 9;
insulatingly wrapping the capacitor element and assembling the capacitor element with the capacitor housing;
fixing positions of the capacitor element and the capacitor housing by means of a predetermined jig, wherein the capacitor element is confined within the predetermined jig and the limiting region of the capacitor housing;
performing potting between the predetermined jig and the limiting region of the capacitor housing, curing at 100°C for 6 hours, and then demoulding the predetermined jig; and
fixing a power module on the capacitor housing and connecting the power module to the capacitor element by means of a copper busbar.
